# EUROPEAN PATENT SPECIFICATION

(11) **EP 1 362 943 B1**
(45) Date of publication and mention of the grant of the patent: **16.07.2008**
(21) Application number: 03008055.0
(22) Date of filing: 14.04.2003
(51) Int. Cl.: D05B 7/00, B60N 2/58

(54) **Method of processing product using fabric and product thereof**
Produktverarbeitung mit Gewebe und Produkt
Procédé de traitement d'un produit utilisant du tissu et produit obtenu

(30) Priority: 02.05.2002 JP 2002130270
(43) Date of publication of application: 19.11.2003
(73) Proprietor: Delta Kogyo Co., Ltd., Aki-gun, Hiroshima 735-8501 (JP); Delta Tooling Co., Ltd., Hiroshima 736-0084 (JP)
(72) Inventor: Fujita, Akira, c/o Delta Kogyo Co., Ltd., Aki-gun, Hiroshima 735-8501 (JP); Takahara, Aya, c/o Delta Tooling Co., Ltd., Hiroshima-shi, Hiroshima 736-0084 (JP); Ogura, Yumi, c/o Delta Tooling Co., Ltd., Hiroshima-shi, Hiroshima 736-0084 (JP)
(74) Representative: HOFFMANN EITLE

(56) References cited:
- EP-A- 0 971 061
- US-A- 5 873 318
- US-A1- 2001 018 883
- PATENT ABSTRACTS OF JAPAN vol. 1997, no. 01, 31 January 1997 (1997-01-31) & JP 08 243271 A (ACHILLES CORP), 24 September 1996 (1996-09-24)

## Description

### BACKGROUND OF THE INVENTION

### 1. FIELD OF THE INVENTION

The present invention relates to a method of processing a fabric product for use in a seat structure, and the products thereof.

### 2. DESCRIPTION OF THE RELATED ART

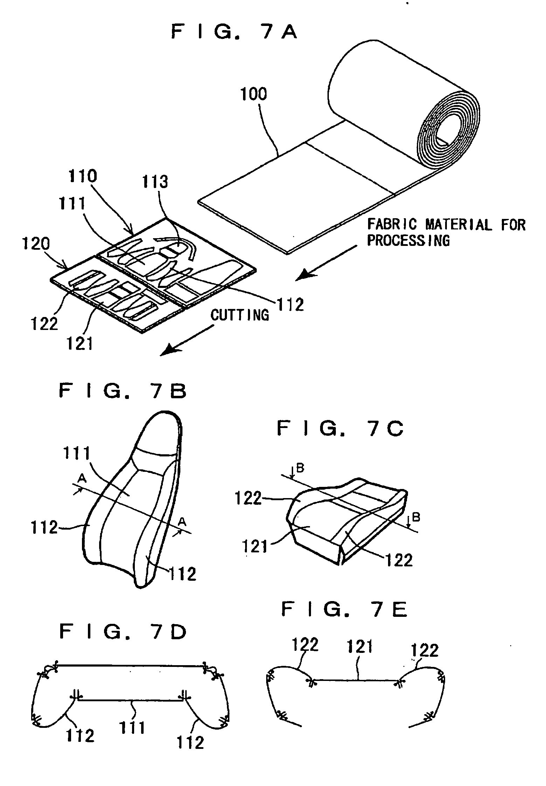

In recent years, a cushioning structure using a three-dimensional structured fabric (a solid knitted fabric) which is thin and lightweight, can provide a high cushioning ability and, at the same time, has many air passages so as to provide excellent breathability is known. The solid knitted fabric (three-dimensional net member) is made into a three-dimensional structure by connecting a pair of opposing grounded knitted fabrics disposed apart from each other with a number of connecting yarns, and has excellent air-permeability, body pressure dispersive property, repulsive elasticity and so on. This solid knitted fabric is used as a cushioning member for various seat structures such as car seats. When such a solid knitted fabric (a three-dimensional net member) is used as a cushioning member for a seat structure, a method shown in FIG. 7A to FIG. 7E is adopted.

First, a fabric material 100 of a solid knitted fabric to be processed is provided usually in a wound roll after knitting as shown in FIG. 7A. Accordingly, when it is processed, the fabric material is rolled out to a predetermined length, and cut largely across its width substantially perpendicular to its longitudinal direction. Then, the cut fabric is divided into two pieces of the fabric 110 for a seat back and the fabric 120 for a seat cushion. The knitted fabric 110 for the seat back is cut along predetermined contour line shapes for a central portion 111, side portions 112, a head rest 113, and so on respectively, and they are sorted. As for the seat cushion, it is similarly cut along predetermined contour line shapes for a central portion 121, side portions 122, and so on, and they are sorted.

For instance, the knitted fabrics for the central portions 111, 121 and for the side portions 112, 122 to be connected on both sides thereof are cut in respective predetermined contour shapes plus margin for connection (margin to seam). Therefore, when both are sewn together, the edges are first aligned, and both are sewn together along the contour lines to be cutting lines. Then, by turning this inside out, a three-dimensional product is formed, which is coincident with a predetermined seat frame shape as shown in FIG. 7B to FIG. 7E.

However, in the conventional method described above, when the pieces of the fabric for the central portions 111, 121, for the side portions 112, 122, and so on are united, since both are sewn together along the shapes of the contour lines, it is necessary as a precondition that the shapes of the cutting lines for the central portions 111, 121, for the side portions 112, 122 and so on to be sewn together conform to the predetermined shapes of respective contour lines, and are cut out following the shapes of the contour lines. Therefore, the shapes of the cutting lines get complicated, and an expensive cutting machine such as that with a Thomson blade or an automatic cutting machine is required. There also arises the problem of taking a lot of time and cost for cutting and processing. Further, since the fabric material for processing is cut out according to the predetermined shape of the contour lines after being cut in a large square shape and the like, many remnants are created, which provides room for improvement in availability of the fabric material for processing.

EP A 0971061 discloses a sewing system and sewing method suitable for sewing a knitted fabric having stitches and a high expansibility and a stitch-less woven fabric having a low expansibility together, and knitted fabrics together.

### SUMMARY OF THE INVENTION

According to the present invention, there is provided a method of processing a fabric product for use in a seat structure, comprising the steps of: uniting one fabric, cut from a fabric material for processing, having a predetermined length and another fabric by connecting the other fabric to said one fabric at a predetermined position; and turning the united one and the other fabrics inside out to conceal a margin for connection, wherein at least one fabric of said one fabric and the other fabric which are to be processed is a three-dimensional net member formed by connecting two layers of a front ground knitted fabric and a back ground knitted fabric with connecting yarns; wherein a cutting step to cut out said at least one fabric from the fabric material to be processed comprises only a cutting step to cut said at least one fabric, on the outer side of the position of connection with the other fabric, linearly in the direction substantially perpendicular to the longitudinal direction of the fabric material for processing so as to be a rectangle; and wherein a marking treatment step to mark the position of connection of the other fabric on said at least one fabric is provided before or after said cutting step.

### BRIEF DESCRIPTION OF THE DRAWINGS

For a better understanding of the invention and to show how the same may be carried into effect, reference will now be made, by way of example, to the accompanying drawings, in which:

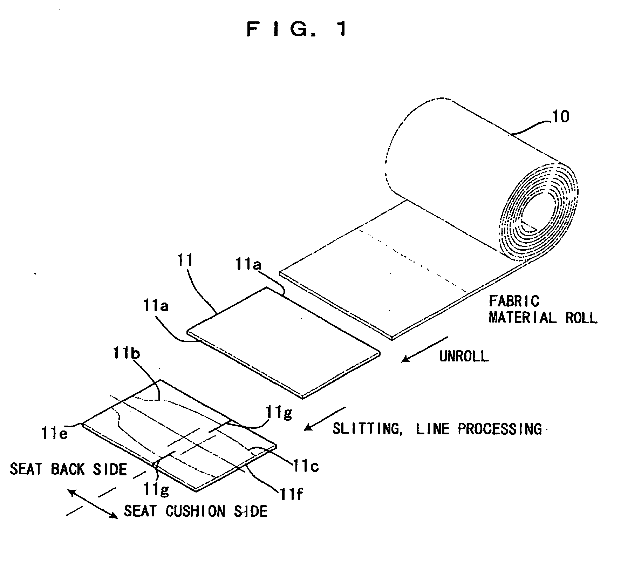

FIG. 1 is a view for explaining a cutting step in a method of processing relating to an embodiment of the present invention;

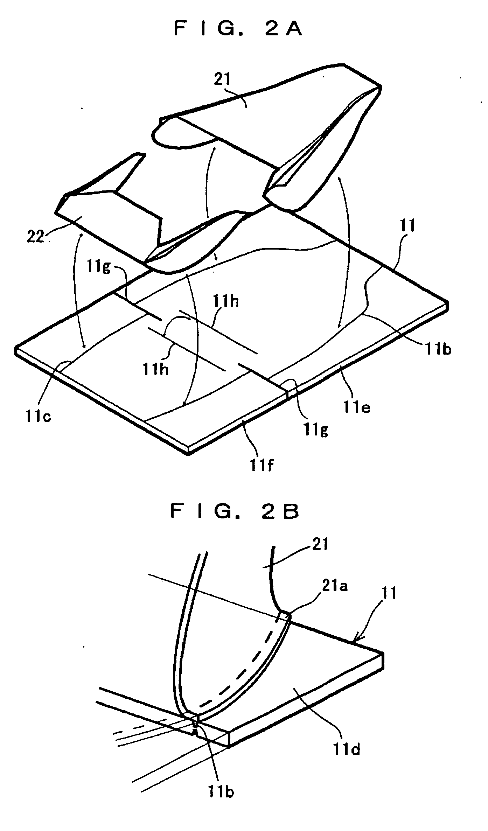

FIG. 2A and FIG. 2B are views for explaining a uniting step of a three-dimensional net member (a solid knitted fabric) to a trim cloth according to the above-described embodiment;

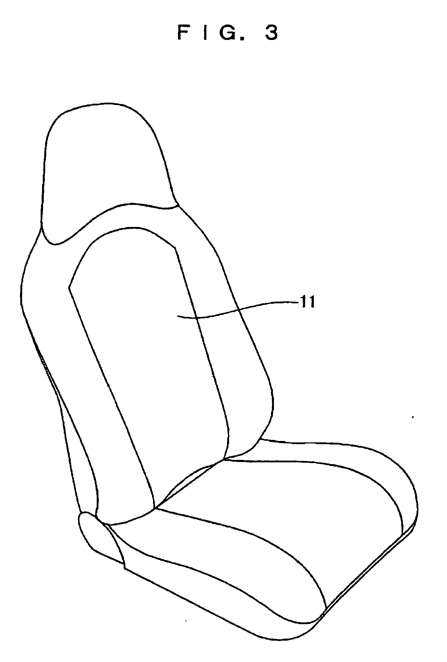

FIG. 3 is an external perspective view showing a state that a product obtained by the above-described embodiment being mounted on a frame member of a car seat;

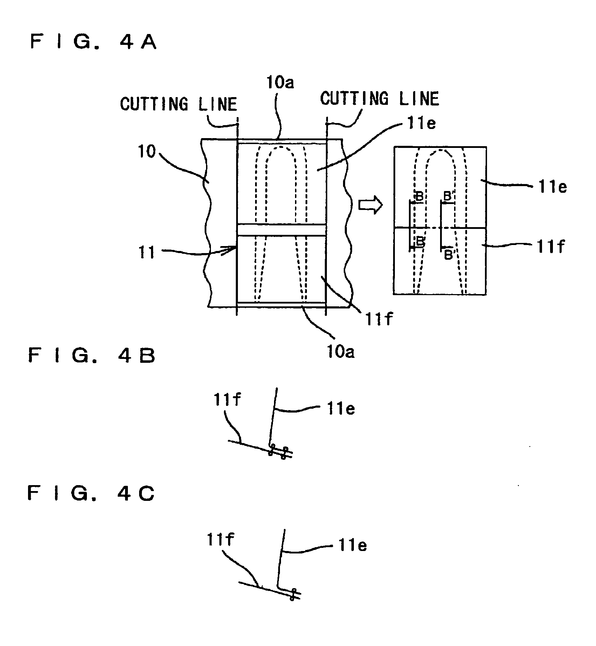

FIG. 4A, FIG. 4B and FIG. 4C are views for explaining a method of processing relating to another embodiment of the present invention. FIG. 4A shows a cutting step. FIG. 4B and FIG. 4C show a state that a solid knitted fabric for a seat back is set on a solid knitted fabric for a seat cushion, in which FIG. 4B is a view taken along the line B-B in FIG. 4A, and FIG. 4C is a view taken along the line B'-B' in FIG. 4A;

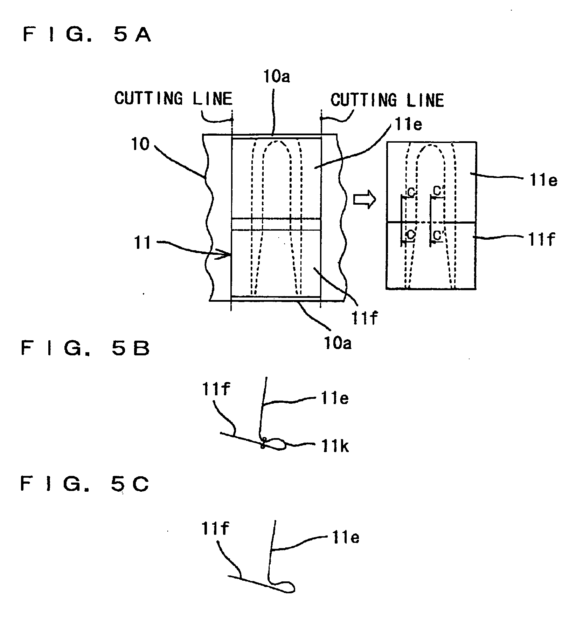

FIG. 5A, FIG. 5B, and FIG. 5C are views for explaining a method of processing relating to still another embodiment of the present invention. FIG. 5A shows a cutting step. FIG. 5B and FIG. 5C show a state that a solid knitted fabric for a seat back is set on a solid knitted fabric for a seat cushion, in which FIG. 5B is a view taken along the line C-C in FIG. 5A, and FIG. 5C is a view taken along the line C'-C' in FIG. 5A;

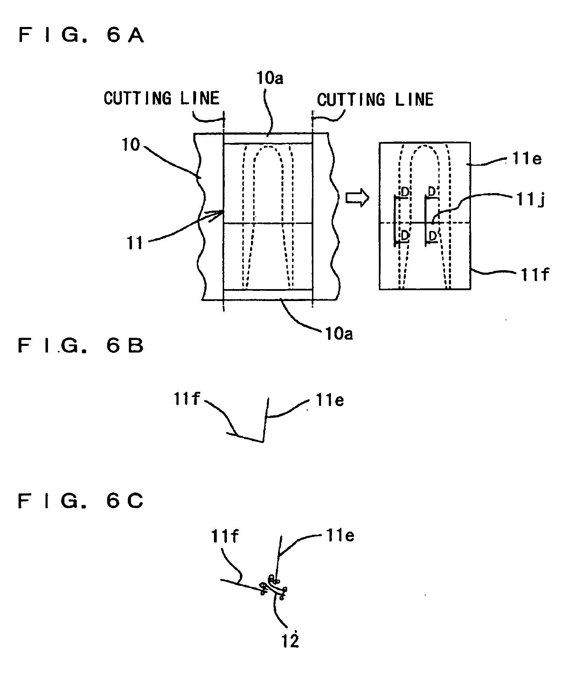

FIG. 6A, FIG. 6B, and FIG. 6C are views for explaining a method of processing relating to yet another embodiment of the present invention. FIG. 6A shows a cutting step. FIG. 6B and FIG. 6C show a state that a solid knitted fabric for a seat back is set on a solid knitted fabric for a seat cushion, in which FIG. 6B is a view taken along the line D-D in FIG. 6A, and FIG. 6C is a view taken along the line D'-D' in FIG. 6A; and
FIG. 7A, FIG. 7B, FIG. 7C, FIG. 7D and FIG. 7E are views for explaining a conventional method of processing. FIG 7A shows a cutting step, FIG. 7B is a setting step of a seat back, FIG. 7C is a setting step of a seat cushion, FIG. 7D is a sectional diagram along the line A-A in FIG. 7B, and FIG. 7E is a sectional diagram along the line B-B in FIG. 7C, respectively.

### DETAILED DESCRIPTION OF THE PREFERRED EMBODIMENT(S)

The following describes a method of processing products using fabric, and the products thereof which facilitate a cutting step, enable reduction of the processing cost, and improve the availability of the fabric material for processing.

As a result of earnest studies to solve the above-described problem, the inventor pays attention to the fact that, conventionally, the reason of cutting a fabric to be processed along a predetermined contour line shape is for convenience of connection (sewing), and also to avoid occurrence of excess portions except a margin for connection (a margin to seam) of the minimum necessity at the time of sewing. The inventor then has reached an idea that by giving a positive function as a cushioning portion to perform a cushioning function to an excess portion excepting the margin for connection in the product, a shape of the cutting line can be made simple so that the above problems can be solved. Further, the inventor has found that the idea is especially useful when it is applied to a product which uses a solid knitted fabric (a three-dimensional net member) as a cushioning member, since when a fabric to be processed is a solid knitted fabric (a three-dimensional net member) used by being strained on a frame member like a seat structure, it produces not only a function that a feeling of hitting of an edge of the excess portion to a human body is avoided by a cushioning function of the solid knitted fabric on the front side, but also a function that a feeling of hitting of the frame member which strains the solid knitted fabric can be further reduced by the layered excess portion.

Embodiments of the present invention provide a method of processing a product using fabric, comprising the steps of: uniting one fabric and the other fabric by connecting the other fabric to the one fabric at a predetermined position; and turning the united one and the other fabrics inside out to conceal a margin for connection, wherein a marking treatment step is provided to mark on the one fabric a position of connection with the other fabric before uniting the one fabric and the other fabric.

The marking treatment step may include a step of marking on the one fabric continuously or partially along the position of connection with the other fabric by a printing means, a sewing means, a welding means, a punching means, or combination of arbitrary two or more of these means.

At least one fabric out of said one fabric and the other fabric which are to be processed is a three-dimensional net member formed by connecting two layers of a front ground knitted fabric and a back ground knitted fabric with connecting yarns.

An alternative method of processing a product using fabric, comprises the steps of: uniting one fabric being used by cutting out from a fabric material for processing and the other fabric by connecting the other fabric to the one fabric at a predetermined position; and turning the united one and the other fabrics inside out to conceal a margin for connection, wherein the cutting step to cut out the one fabric from the fabric material for processing includes only a cutting step to cut the one fabric along a line shape simpler than the contour line shape along the position of connection with the other fabric on the outer side than the position of connection; and wherein a marking treatment step to mark the position of connection of the other fabric is provided before or after the cutting step but such a method lies outside the scope of the amended claims, except when said simpler line shape is linear in the direction substantially perpendicular to the longitudinal direction of the fabric material for processing

The marking treatment step may include a step of marking on the one fabric continuously or partially along the position of connection with the other fabric by a printing means, a sewing means, a welding means, a punching means, or combination of arbitrary two or more of these means.

At least one fabric out of the one fabric and the other fabric which are to be processed is a three-dimensional net member formed by connecting two layers of a front ground knitted fabric and a back ground knitted fabric with connecting yarns.

A further embodiment of the present invention provides a method of processing a product using fabric, comprising the steps of: uniting one fabric being used by cutting out from a fabric material for processing having a predetermined length and the other fabric by connecting the other fabric to the one fabric at a predetermined position; and turning the united one and the other fabrics inside out to conceal a margin for connection, wherein the cutting step to cut out the one fabric from the fabric material for processing includes only a cutting step to cut the one fabric nearly linearly in the direction substantially perpendicular to the longitudinal direction of the fabric material for processing so as to be a predetermined size on the outer side than the position of connection with the other fabric; and wherein a marking treatment step to mark the position of connection of the other fabric is provided before or after the cutting step.

The marking treatment step may include a step of marking on the one fabric continuously or partially along the position of connection with the other fabric by a printing means, a sewing means, a welding means, a punching means, or combination of arbitrary two or more of these means.

At least one fabric out of the one fabric and the other fabric which are to be processed is a three-dimensional net member formed by connecting two layers of a front ground knitted fabric and a back ground knitted fabric with connecting yarns.

The present fabric product may be formed by a method comprising the steps of: marking a position of connection with the other fabric on one fabric; uniting the one fabric with the other fabric by connecting both together at a marked, predetermined position; and turning the united one and the other fabrics inside out to conceal a margin for connection.

The fabric may also be formed by a method comprising the steps of: marking a position of connection with the other fabric before or after a cutting step to cut out one fabric from the fabric material for processing; cutting the one fabric along a line shape simpler than the contour line shape along the position of connection with the other fabric on the outer side than the position of connection, in the cutting step to cut out the one fabric from the fabric material for processing; uniting the one fabric with the other fabric by connecting both together at a marked, predetermined position; and turning the united one and the other fabrics inside out to conceal a margin for connection but such a method lies outside the scope of the amended claims, except when said simpler line shape is linear in the direction substantially perpendicular to the longitudinal direction of the fabric material for processing.

The present fabric may also be formed by a method comprising the steps of: marking a position of connection with the other fabric before or after a cutting step to cut out one fabric from the fabric material for processing; cutting the one fabric nearly linearly in the direction substantially perpendicular to the longitudinal direction of the fabric material for processing so as to be a predetermined size on the outer side than the position of connection with the other fabric, in the cutting step to cut out the one fabric from the fabric material for processing; uniting the one fabric used by cutting out from the fabric material for processing having a predetermined length with the other fabric by connecting both together at a marked, predetermined position; and turning the united one and the other fabrics inside out to conceal a margin for connection.

The present fabric may also be formed by a method comprising uniting one fabric and the other fabric by connecting the other fabric to the one fabric at a predetermined position and turning the united one and the other fabrics inside out to conceal a margin for connection, wherein at least the one fabric includes an excess portion remaining on the outside of the margin for connection, and the excess portion serves as a cushioning portion.

At least one fabric out of the one fabric and the other fabric is a three-dimensional net member formed by connecting two layers of a front ground knitted fabric and a back ground knitted fabric with connecting yarns.

The present invention will be explained further in detail based on the embodiments shown in the drawings below. FIG. 1 to FIG. 3 are views for explaining a method of processing relating to the embodiments using a three-dimensional net member (a solid knitted fabric). Incidentally, in the present embodiment, the solid knitted fabric composes one fabric and a trim cloth connecting to the solid knitted fabric composes the other fabric. As shown in FIG. 1, a fabric material 10 for processing for the solid knitted fabric has a predetermined length and a predetermined width, and is provided in a wound rolled state along its longitudinal direction.

The solid knitted fabric is formed in a three-dimensional structure by connecting two layers of front and back ground knitted fabrics to each other with connecting yarns. As the solid knitted fabric, for instance, a ground knitted fabric composing a front layer and a back layer is made of any of synthetic fiber such as polytrimethylene terephthalate fiber, polyethylene terephthalate fiber, polybuthylene terephthalate fiber, polyamide fiber, polyacrylonitrile fiber, polypropylene fiber, and so on, or of natural fiber such as cotton, linen, wool and so on, and the connecting yarn is also made of similar fiber. The connecting yarn is preferably made of monofilament. The solid knitted fabric is knitted with a double Raschel knitting machine, a double circular knitting machine, a flat knitting machine having a V bed, or the like is known. However, the type of solid knitted fabric (the three-dimensional net member) adoptable in the present embodiment is not limited to any specific kind.

In the present embodiment, the fabric material 10 in a wound roll is first pulled out at a predetermined length. Then, for instance, when it is used for a cushioning member for a seat structure, it is cut at a length necessary to form a seat back and a seat cushion. In this cutting step, in the case of the present embodiment, the fabric material 10 is cut substantially linearly in a nearly perpendicular direction to the longitudinal direction of the fabric material 10 (that is, along the width direction of the fabric material 10). Therefore, in the cutting step of the present embodiment, a simple cutting machine which can cut the fabric material 10 substantially linearly can be used. Accordingly, a solid knitted fabric 11 which forms the one fabric to be processed is cut out substantially in a rectangle. Further, by performing the cutting step by a melt down method, the edge portion of the solid knitted fabric 11 can be partially melted. When a solid knitted fabric is used, in order to prevent ravels of yarn or fiber which composes the solid knitted fabric, folding back treatment or welding treatment is usually necessary on its edge portion. Use of a melt down method permits to perform cutting down of the solid knitted fabric and welding treatment to prevent ravels at the edge portion simultaneously.

Trim cloths 21 and 22 which are the other fabric as shown in FIG. 2A and FIG. 2B are supposed to connect to the solid knitted fabric 11 which is the one fabric. Since the solid knitted fabric 11 is only cut out substantially in a rectangle as described above, its sewing line (contour line) which will be a position of connection to the trim cloths 21 and 22 is not clear with this rectangular fabric only. Hitherto, since its cutting line is formed following to the sewing line (i.e. the position of connection) in advance, sewing and the like can be easily performed by sewing along the cutting line. However, in the case of the present embodiment, a cutting line 11a is formed with no relation to the sewing line which will be the position of the connection, as described above.

Therefore, it is necessary to form the sewing line to be the position of the connection separately. Then, in the present embodiment, marking treatment is performed to give marking for forming sewing lines 1b and 11c on the solid knitted fabric which is cut out substantially in a rectangle as described above by a predetermined means. The means to give the marking is optional, and for instance, a printing means, a sewing means, a welding means, a punching means and so on can be used. The printing means is to print the marking with any optional ink, printer or the like along the sewing lines 11b and 11c. The sewing means is to sew , for instance, yam or the like different in color from the yarn or fiber which forms the solid knitted fabric 11 into the solid knitted fabric 11 along the sewing lines 11b and 11c with a sewing machine. The welding means is to thin the solid knitted fabric 11 along the sewing lines 11b and 11c by vibration welding. The marking formed by these means can be formed in a continuous line or can be formed partially (in a dotted line, for instance) along the sewing lines 11b and 11c. When performing the punching means, however, the marking is partially formed along the sewing lines 11b and 11c. Two or more means among the printing means, sewing means, welding means, and punching means can be combined optionally to use for the marking treatment.

It is preferable for the marking treatment described above to be a structure that stores the coordinates or the like indicating the position at which the sewing lines 11b and 11c are formed in a control section of a machine for the printing means, sewing means, welding means or the like, so that the marking treatment is performed automatically. Thereby, it becomes possible to carry out processing treatment more rapidly. Further, in the present embodiment, although the above-described marking treatment is carried out after cutting the fabric material 10 to get the solid knitted fabric 11 to be the one fabric substantially in a rectangle, it is also possible to give the marking treatment in advance on the fabric material 10 before the cutting step substantially in a rectangle. Furthermore, in such a case, although it is possible to give the marking treatment by printing means or the like to the fabric material 10 once knitted, when the fabric material 10 is knitted, only portions corresponding to the sewing lines 11b and 11c are knitted with yarn or fiber different in color, so that the marking treatment can beaccomplished simultaneously with knitting of the fabric material 10.

As shown in FIG. 2A and FIG. 2B, when the sewing lines 11b and 11c to be positions of connection are formed on the solid knitted fabric 11 which is the one fabric, as described above, margins to seam 21a at the end portions of the trim cloths 21 and 22 which are the other fabric are folded outward and both fabrics are connected together by sewing or the like. After the solid knitted fabric 11 and the trim cloths 21 and 22 are thus united, in order to conceal the margins for connection (the margins to seam 21a), they are turned inside out so that the margins to seam 21a are positioned on the back side when being used. Then, the product of the present embodiment thus formed is used, for instance, by covering a frame member which forms a seat as shown in FIG. 3.

According to the present embodiment, the solid knitted fabric 11 and the trim cloths 21 and 22 are sewn together (connected) along the positions of connection (the sewing lines 11b, 11c) formed by the above-described marking treatment. They are not connected using the cutting line as a guide as is in the conventional manner. Therefore, when performed by the conventional method, it contains a cutting error as a processing error at the time of cutting other than the sewing error (connection error) created when the solid knitted fabric 11 and the trim cloths 21 and 22 are united together. However, when performed according to the present embodiment, since the cutting step is carried out with no relation to the sewing lines 11b and 11c as described above, consideration for such a cutting error becomes unnecessary. Besides, as in the present embodiment, when the solid knitted fabric (three-dimensional net member) 11 having a predetermined thickness is cut out, since a deviation at the time of cutting step is comparatively large due to the elasticity of the solid knitted fabric 11, the disclosed method is especially effective when a product using the solid knitted fabric is formed.

Further, as shown in FIG. 1, since the solid knitted fabric 11 is just cut out substantially in a rectangle, different from the conventional method of cutting along the sewing line, there provides an excess portion 11d on the outside of a portion corresponding to the conventional margin for connection (margin to seam) (refer to FIG. 2B). Therefore, when turned inside out to conceal the margin for connection (the margin to seam) 21a as described above, the excess portion 11d overlaps with the solid knitted fabric on the front side, and the portion corresponding to the excess portion is doubled.

Here, the cutting line is given a ravel preventing means to prevent ravels of yarn or fiber from the end portion by, for instance, folding back the edge portion irrespective of the kind of the fabric. For instance, in the case of the solid knitted fabric, since the yarn or the fiber which forms the solid knitted fabric is prevented fromraveling by welding its edge portion, stiffness of the edge portion becomes high. Accordingly, when the excess portion 11d is used in a state of being overlapped by the fabric on the front side as in the present embodiment, if the fabric is thin, the edge portion which is high in stiffness serves as a source of a feeling of hitting. However, when a solid knitted fabric is used as the one fabric as in the present embodiment, the edge portion having a high stiffness seldom serves as a source of a feeling of hitting owing to the thickness of the solid knitted fabric (cushioning function) positioned on the front side. When a solid knitted fabric is used for a cushioning member of a seat structure, since the solid knitted fabric is provided on a frame member in a hammock state, it is requested to reduce a feeling of hitting of the frame member. In order to reduce the feeling of hitting of the frame member, measures are usually taken such that a urethane member is insertedly disposed on the portion positioned on the frame member. On the contrary, according to the present embodiment, by disposing the above-described excess portion 11 d on the frame member, it becomes possible to make it serve as a cushioning member to reduce the feeling of hitting with no use of a urethane member or the like.

When a solid knitted fabric is used as a cushioning member of a seat as described in the present embodiment, the width of the fabric material 10 wound in a roll is knitted to have a length widthwise in such that, substantially with a half of the width a cushion member having a required size for a seat back or a seat cushion can be cut out. Therefore, as shown in FIG. 1, FIG. 2A and FIG. 2B, nearly half of the solid knitted fabric 11 cut out substantially in a rectangle is used for a seat back and the remaining nearly a half thereof is used for a seat cushion. However, it is optional whether a solid knitted fabric 11e for the seat back and a solid knitted fabric 11f for the seat cushion are cut apart or not.

For instance, in FIG. 1, FIG. 2A and FIG. 2B, though incisions 11g are provided in the vicinity of both sides, the solid knitted fabric 11e for the seat back and the solid knitted fabric 11f for the seat cushion are not cut apart at nearly the central portion, and after attaching the trim cloths 21 and 22 to the solid knitted fabrics 11e and 11f respectively by the above-described method into an integrated form, they are then turned inside out. Both solid knitted fabrics for the seat back and seat cushion are connected along lines 11h and 11h which indicate their positions of connection formed in the vicinity of the boundary between the solid knitted fabric 11e for the seat back and the solid knitted fabric 11f for the seat cushion by sewing or vibration welding. Through this method, the vicinity of the boundary is formed in a cylindrical shape, so that these portions can be engaged with the frame member and can be pulled in backward.

FIG. 4A, FIG. 4B, and FIG. 4C show an example to cut apart the solid knitted fabric 11e for the seat back and the solid knitted fabric 11f for the seat cushion apart and FIGS. 5A, 5B, 5C and FIGS, 6A, 6B, 6C show other examples of both solid knitted fabrics which are not cut apart as in FIG. 1.

As shown in FIG. 4A, when the solid knitted fabric 11e for the seat back and the solid knitted fabric 11f for the seat cushion are cut apart, both are connected by sewing or the like (refer to FIG. 4B, and FIG. 4C). As shown in FIG. 5A, when the solid knitted fabric is formed without making any incisions at the boundary between the solid knitted fabric 11e for the seat back and the solid knitted fabric 11f for the seat cushion, only the vicinity of both sides near the boundary between both fabrics is formed in a cylindrical shape (refer to FIG. 5B and FIG. 5C), so that it can be engaged with the frame member to pull in the above portion backward. As shown in FIG. 6A, it is possible to make an incision 11j only substantially at the central portion in the vicinity of the boundary between the solid knitted fabric 11e for the seat back and the solid knitted fabric 11f for the seat cushion. In this case, as shown in FIG. 6B and FIG. 6C, fabric 12 for pulling the solid knitted fabric is provided separately substantially at the central portion to project the fabric 12 backward by sewing, vibration welding or the like and connected to any frame member so that the solid knitted fabrics 11e and 11f can be pulled-in backward.

In any case, according to the present embodiment, irrespective of whether a solid knitted fabric for a seat back and a solid knitted fabric for a seat cushion are cut apart or not, even an edge portion 10a of the end portion in the width direction of the fabric material 10, which has been hitherto scrapped as a remnant can be used as it is without cutting off, which improves the availability of the fabric material 10. According to the conventional method shown in FIG. 7A, FIG. 7B, FIG. 7C, FIG. 7D, and FIG. 7E, though the availability of the fabric material has been about 70% to about 85% at maximum, according to the present embodiment, the availability becomes more than 90%. Further, in a solid knitted fabric used for a cushioning member of a seat structure, as in the present embodiment, only one part, the solid knitted fabric 11, substantially in a rectangle shape, which contains the solid knitted fabric 11e for the seat back and the solid knitted fabric 11f for the seat cushion is enough to be cut out, or only two parts, the solid knitted fabric 11e for the seat back and the solid knitted fabric 11f for the seat cushion, are enough to be cut out. Thus the cutting step can be quite simplified compared with the conventional method shown in FIG. 7A, FIG. 7B, FIG. 7C, FIG. 7D and FIG. 7E.

Further, as shown in FIG. 1, FIGS. 5A, 5B, 5C, and FIGS. 6A, 6B, 6C, when the solid knitted fabric 11e for the seat back and the solid knitted fabric 11f for the seat cushion are used integrally without being cut apart, since places required to be connected become less, further reduction of the cutting cost can be realized, and when it is used for a car seat and the like, a break of the continuity of yarn composing the solid knitted fabric, which is a weak point at the time of receiving impact, does not occur. As a result, discontinuity in strength can be prevented from occurring and rupture at the weak point can be avoided. Further, the energy absorbency against impact force (collision) can be improved by elongation of the yarn. Furthermore, compared with the case of connecting both after cutting them apart, this method can reduce size variation due to sewing, and make a feeling of seating and the riding comfort stable. Still further, since the constitution of the fabric in the vicinity of the boundary between the solid knitted fabric 11e for the seat back and the solid knitted fabric 11f for the seat cushion is continuous, no portion is found where stiffness is partially high. Accordingly, a portion corresponding to a node of a vibration mode does not exist at the lower end of the waste portion, which makes it possible to absorb minute vibration, thereby contributing improvement of vibration absorbency around the waist. Furthermore, as shown in FIG. 5B, when the solid knitted fabric 11e for the seat back and the solid knitted fabric 11f for the seat cushion are connected together by sewing or vibration welding in the vicinity of their boundary to form a bag portion 11k like a cylindrical shape, its breakability is adjusted by variously adjusting the interval and the like between the positions for sewing or positions for welding so that an air bag can be installed in the bag portion 11k.

It is needless to say that the present invention is not limited to the embodiments above described. Though in the above-described embodiments, a three-dimensional net member (a solid knitted fabric) is used as said one fabric and a trim cloth which is a two-dimensional fabric member is used as the other fabric, but both may be a three-dimensional net member (a solid knitted fabric). Alternatively, both may be a two-dimensional fabric member (a woven fabric, a knitted fabric, a non woven fabric, a sheet rubber and so on), but such an arrangement lies outside the scope of the appended claims. However, embodiments of the present invention are applied to a three-dimensional net member (a solid knitted fabric) as described above. Further, when a three-dimensional product is formed using two or more fabrics, since folds are often created at corner portions, bending portions or the like at the time of processing three-dimensionally, an excess fabric portion needs to be cut lest such a folds-by-processing should be created in the case of two-dimensional fabric. However, in the case of the three-dimensional net member (solid knitted fabric), folds-by-processing can be absorbed by deformation of stitches of a ground knitted fabric, by fall of connecting yarns, or the like and no cutting of the excess fabric portion is required. This is why the disclosed method is suitable in the case of forming a product using a three-dimensional net member (a solid knitted fabric).

Furthermore, in the above-described embodiments, a rolled fabric material is used, and cut substantially in a straight line along its width direction. Compared with the conventional step, the cutting step can be more simplified by cutting on the side outer than the contour line along the positions of connection of respective fabrics, along a line shape simpler than the contour line shape. Therefore, for instance, it is also possible to cut substantially in a curve larger than the contour line.

Further, when other members such as a plastic member, a metal member, and the like which are fixed for fitting to a frame member and the like or fixed as an accessory or the like, by sewing, vibration welding or the like, are provided to a product formed according to an embodiment of the present invention, they are easily fixed by giving marking treatment on positions to be fixed.

The disclosed method can be applied not only to a cushioning member for a seat structure but also to a cushioning member for a bed or the like, but such an arrangement lies outside the scope of the appended claims.

The method of processing a product using fabric is provided with a marking treatment step to mark a position of connection of the one fabric and the other fabric before uniting the one fabric and the other fabric. Thereby, a cutting step of the fabric material can be facilitated, and the cost of cutting can be reduced. Further, occurrence of remnants can be made almost zero when the fabric material is cut, which improves availability thereof.

Further, in the disclosed product using fabric, at least the one fabric out of fabrics connected to each other has an excess portion remaining on the outside of the margin for connection between both fabrics, and the excess portion is used as a cushioning portion. Therefore, when the product is formed, it becomes unnecessary to cut along the contour lines of the product after formation, which facilitates the cutting step, so that a cheap product can be provided.

While preferred embodiments of the invention have been described with a certain degree of particularity with reference to the drawings, obvious modifications and variations are possible in light of the above teachings. The scope of the invention is to be determined from the claims appended thereto.

## Claims

1. A method of processing a fabric product for use in a seat structure, comprising the steps of:
uniting one fabric, cut from a fabric material for processing, having a predetermined length and another fabric by connecting the other fabric to said one fabric at a predetermined position; and
turning the united one and the other fabrics inside out to conceal a margin for connection,
wherein at least one fabric (11) of said one fabric and the other fabric which are to be processed is a three-dimensional net member formed by connecting two layers of a front ground knitted fabric and a back ground knitted fabric with connecting yarns;
wherein a cutting step to cut out said at least one fabric (11) from the fabric material to be processed comprises only a cutting step to cut said at least one fabric (11), on the outer side of the position of connection (11b, 11c) with the other fabric, linearly in the direction substantially perpendicular to the longitudinal direction of the fabric material for processing so as to be a rectangle; and
wherein a marking treatment step to mark the position of connection of the other fabric on said at least one fabric (11) is provided before or after said cutting step.

2. The method of processing a seat structure from fabric according to claim 1, wherein said marking treatment step includes a step of marking on said at least one fabric (11) continuously or partially along the position of connection with the other fabric by a printing means, a sewing means, a welding means, a punching means, or combination of arbitrary two or more of these means.

## Patentansprüche

1. Verfahren zur Verarbeitung eines Gewebeprodukts zur Verwendung in einer Sitzstruktur, das die Schritte aufweist:
Vereinigen eines aus einem Gewebematerial zur Verarbeitung geschnittenen Gewebes, das eine vorbestimmte Länge aufweist, und eines weiteren Gewebes, indem das weitere Gewebe mit dem einen Gewebe an einer vorbestimmten Position verbunden wird; und
Umkrempeln der vereinigten einen und der weiteren Gewebe, um einen Verbindungsrand zu verbergen,
bei dem zumindest ein Gewebe (11) des einen Gewebes und des weiteren Gewebes, die verarbeitet werden sollen, ein dreidimensionales Netzelement ist, das durch Verbinden zweier Lagen einer Vordergrund-Maschenware und einer Hintergrund-Maschenware mit Verbindungsgarnen ausgebildet wird;
bei dem ein Schneideschritt zum Ausscheiden des zumindest einen Gewebes (11) aus dem zu verarbeitenden Gewebematerial lediglich einen Schneideschritt aufweist, um das zumindest eine Gewebe (11), an der äußeren Seite der Position der Verbindung (11b, 11c) mit dem weiteren Gewebe, linear in der zur Längsrichtung des Gewebematerials im Wesentlichen senkrechten Richtung zur Verarbeitung zu schneiden, um ein Rechteck zu bilden, und
bei dem ein Markierungsbehandlungsschritt zum Markieren der Verbindungsposition des weiteren Gewebes an dem zumindest einen Gewebe (11) vor oder nach dem Schneideschritt vorgesehen ist.

2. Verfahren zur Verarbeitung einer Sitzstruktur aus Gewebe gemäß Anspruch 1, bei dem der Markierungsbehandlungsschritt einen Schritt des Markierens an dem zumindest einen Gewebe (11) kontinuierlich oder teilweise entlang der Verbindungsposition mit dem weiteren Gewebe mittels eines Bedruckmittels, eines Nähmittels, eines Schweißmittels, eines Lochers, oder einer beliebigen Kombination zweier oder mehrere dieser Mittel aufweist.

## Revendications

1. Procédé pour le traitement d'un produit de tissu destiné à l'utilisation dans une structure de siège, comprenant les étapes consistant à :
réunir un premier tissu découpé à partir d'un matériau de tissu pour le traitement, tissu ayant une longueur prédéterminée, et un autre tissu en raccordant l'autre tissu audit premier tissu sur une position prédéterminée ; et
retourner le tissu uni et les autres tissus à l'envers pour cacher une bordure destinée au raccord,
dans lequel au moins un tissu (11) dudit premier tissu et de l'autre tissu qui doivent être traités est un élément de filet tridimensionnel formé par la réunion de deux couches d'un tissu tricoté en avant et d'un tissu tricoté en arrière avec des fils de raccord;
dans lequel une étape de coupe pour découper ledit au moins premier tissu (11) du matériau de tissu à traiter ne comprend qu'une étape de coupe pour couper ledit au moins premier tissu (11), sur le côté extérieur de la position de raccordement (11b, 11c) avec l'autre tissu, linéairement dans la direction sensiblement perpendiculaire à la direction longitudinale du matériau de tissu pour le traitement, de façon à obtenir un rectangle ; et
dans lequel une étape de traitement de marquage, destinée à marquer la position de raccordement de l'autre tissu sur ledit au moins premier tissu (11), est prévue avant ou après ladite étape de coupe.

2. Procédé de traitement d'une structure de siège à partir d'un tissu selon la revendication 1, dans lequel ladite étape de traitement de marquage comprend une étape consistant à marquer sur ledit au moins premier tissu (11), de façon continue ou partiellement le long de la position de raccordement avec l'autre tissu, par des moyens d'impression, des moyens de couture, des moyens de soudure, des moyens de poinçonnage ou une combinaison arbitraire de deux ou de plus de deux de ces moyens.
